## Europäisches Patentamt

## European Patent Office

## Office européen des brevets

(19)

(11) Veröffentlichungsnummer: **0 223 152**
**B1**

(12) **EUROPÄISCHE PATENTSCHRIFT**

(45) Veröffentlichungstag der Patentschrift:
08.02.89

(51) Int. Cl.⁴: **B 23 B 5/40**

(21) Anmeldenummer: 86115306.2

(22) Anmeldetag: 05.11.86

(54) Vorrichtung zum Bearbeiten von kugelig gekrümmten Innenflächen an einem Werkzeug.

(30) Priorität: 06.11.85 DE 3539335

(43) Veröffentlichungstag der Anmeldung:
27.05.87 Patentblatt 87/22

(45) Bekanntmachung des Hinweises auf die Patenterteilung:
08.02.89 Patentblatt 89/6

(84) Benannte Vertragsstaaten:
DE FR GB IT

(56) Entgegenhaltungen:
DD-A- 51 511
DD-A- 67 010
DE-A- 1 477 595
DE-C- 848 138
DE-C- 3 042 400

(73) Patentinhaber: Gebr. Heller Maschinenfabrik GmbH,
Postfach 1428 Neuffener Strasse 54, D-7440 Nürtingen
(DE)

(72) Erfinder: **Der Erfinder hat auf seine Nennung verzichtet**

(74) Vertreter: Kohl, Karl-Heinz et al, Patentanwälte
Dipl.-Ing. A.K. Jackisch-Kohl Dipl.-Ing. K.H. Kohl
Stuttgarter Strasse 115, D-7000 Stuttgart 30 (DE)

## Beschreibung

Die Erfindung betrifft eine Vorrichtung zum Bearbeiten von kugelig gekrümmten Innenflächen an einem Werkstück nach dem Oberbegriff des Anspruches 1.

Eine solche Vorrichtung ist aus der DE-PS 30 42 400 bekannt. Sie dient zum Ausbohren von kugelig gekrümmten Innenflächen an einem Werkstück, wobei das Schneidwerkzeug mittels der Hohlspindel und der Bohrstange gedreht und gleichzeitig zur Erzeugung der gekrümmten Innenfläche geschwenkt wird. Mit der Zeit wird die Schneide des Schneidwerkzeuges abgenutzt, so dass der radiale Abstand zwischen der Schneide und der Drehachse des Werkzeugträgers verändert wird. Mit der Nachstelleinrichtung wird die Schneide automatisch auf den gewünschten Abstand nachgestellt. Hierzu ist der Werkzeugträger mit einem radial nach aussen biegbaren Halterungsteil versehen, der mittels der Schubstange radial nach aussen gebogen werden kann. Die Schubstange ist hierzu mit einer Keilfläche versehen, über die ein zylindrischer Kolben gegen Federkraft verschiebbar ist. Er ist seinerseits mit einer Keilfläche versehen, an der ein Stössel mit einer Gegenkeilfläche anliegt, der ausserdem am radial nach aussen biegbaren Teil des Werkstückträgers anliegt. Beim Verschieben des Kolbens mittels der Schubstange wird über die aneinanderliegenden Keilflächen der Stössel radial nach aussen verschoben und drückt hierbei den das Schneidwerkzeug tragenden Teil des Werkstückträgers radial nach aussen. Dadurch wird der Abstand zwischen der Schneide des Schneidwerkzeuges und der Drehachse des Werkstückträgers auf das gewünschte Mass nachgestellt. Diese Nachstelleinrichtung ist kompliziert ausgebildet und besteht aus einer Vielzahl von Teilen. Die verschiedenen Keilflächen, mit denen die erforderlichen Verschiebebewegungen erzeugt werden, müssen genau aufeinander abgestimmt werden, um die gewünschte feinfühlige Verstellung des Schneidwerkzeuges zu erreichen. Der elastisch nach aussen biegbare Teil erfordert eine aufwendige Ausbildung des Werkstückträgers. Infolge der grossen Zahl von in unterschiedlichen Richtungen verschiebbaren Teilen besteht die Gefahr, dass sie verklemmen oder verkanten, zumindest jedoch keine leichtgängige Verstellung des Schneidwerkzeuges ermöglichen. Darüber hinaus ist die Nachstelleinrichtung kostenaufwendig in der Herstellung.

Der Erfindung liegt die Aufgabe zugrunde, die gattungsgemässe Vorrichtung so auszubilden, dass sie bei konstruktiv einfacher Ausbildung eine genaue Nachstellung des Schneidwerkzeuges ohne Gefahr des Verkantens der Teile der Nachstelleinrichtung ermöglicht.

Diese Aufgabe wird bei der gattungsgemässen Vorrichtung erfindungsgemäss mit den kennzeichnenden Merkmalen des Anspruches 1 gelöst.

Bei der erfindungsgemässen Vorrichtung ist zum Nachstellen der Schneide der Exzenterteil vorgesehen. Da seine Achse parallel zur Drehachse des Werkzeugträgers liegt, wird durch diesen Achsversatz beim Drehen des Exzenterteiles der Werkzeugträger und damit auch das an ihm befestigte Schneidwerkzeug radial verstellt. Somit kann durch einen einfachen Drehvorgang das Schneidwerkzeug im gewünschten Masse nachgestellt werden. Zum Drehen des Exzenterteiles sind keine aufwendigen Ausbildungen erforderlich. Der Werkzeugträger kann massiv ausgebildet sein und benötigt keinen radial nach aussen elastisch verbiegbaren Teil. Dadurch hat der Werkzeugträger eine hohe Starrheit bzw. Steifigkeit, so dass eine hohe Bearbeitungsgenauigkeit trotz der automatischen Nachstellmöglichkeit des Schneidwerkzeuges jederzeit gewährleistet ist. Der Exzenterteil lässt sich mühelos um die Drehachse des Werkzeugträgers verstellen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen

Fig. 1 in Seitenansicht und teilweise im Schnitt in schematischer Darstellung eine erfindungsgemässe Vorrichtung zum Ausbohren von kugelig gekrümmten Innenflächen an einem Werkstück,

Fig. 2 einen Längsschnitt durch einen drehbaren Werkzeugträger der Vorrichtung längs der Linie II-II in Fig. 4,

Fig. 3 einen Schnitt längs der Linie III-III in Fig. 4,

Fig. 4 in vergrösserter Darstellung und im Schnitt das vordere Ende einer Bohrstange der erfindungsgemässen Vorrichtung im Bereich des Werkzeugträgers,

Fig. 5 teilweise in Ansicht und teilweise im Schnitt längs der Linie V-V in Fig. 3 den Werkzeugträger gemäss Fig. 4 in der Ausgangsstellung,

Fig. 6 in einer Darstellung entsprechend Fig. 4 eine zweite Ausführungsform einer Nachstelleinrichtung der erfindungsgemässen Vorrichtung,

Fig. 7 eine Draufsicht teilweise im Schnitt auf die Nachstellvorrichtung gemäss Fig. 6,

Fig. 8 im Schnitt eine dritte Ausführungsform einer Nachstelleinrichtung der erfindungsgemässen Vorrichtung,

Fig. 9 in Seitenansicht eine vierte Ausführungsform einer Nachstelleinrichtung der erfindungsgemässen Vorrichtung.

Die Vorrichtung dient zum Ausbohren von kugelig gekrümmten Innenflächen an einem Werkstück. Die Vorrichtung weist einen auf einem Bett 1 hin- und herbeweglichen Schlitten 2 auf, auf dem in einem Gehäuse 3 eine Arbeitsspindel gelagert ist, die als Hohlspindel 8 ausgeführt und in der eine Zug- bzw. Schubstange 4 geführt ist. An ihrem einen Ende ist das eine Ende eines Hebels 5 angelenkt, an dessen anderem Ende ein drehbar gelagerter Werkzeugträger 6 angelenkt ist. Er ist in einer Bohrstange 7 untergebracht, die mit der Hohlspindel 8 drehfest verbunden ist. Sie ist im Gehäuse 3 drehbar gelagert und an ihrem gegenüberliegenden Ende über ein Getriebe 9, das im Ausführungsbeispiel ein Riementrieb ist, mit einer Antriebswelle 10 eines Antriebes 11 verbunden. Mit ihm wird die Hohlspindel 8 rotierend angetrieben.

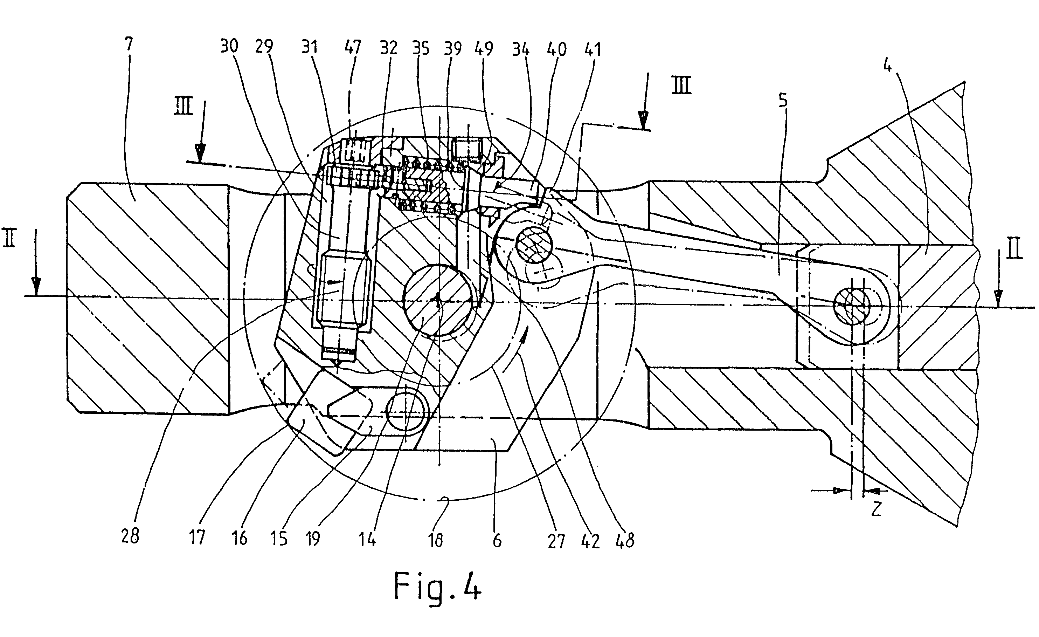

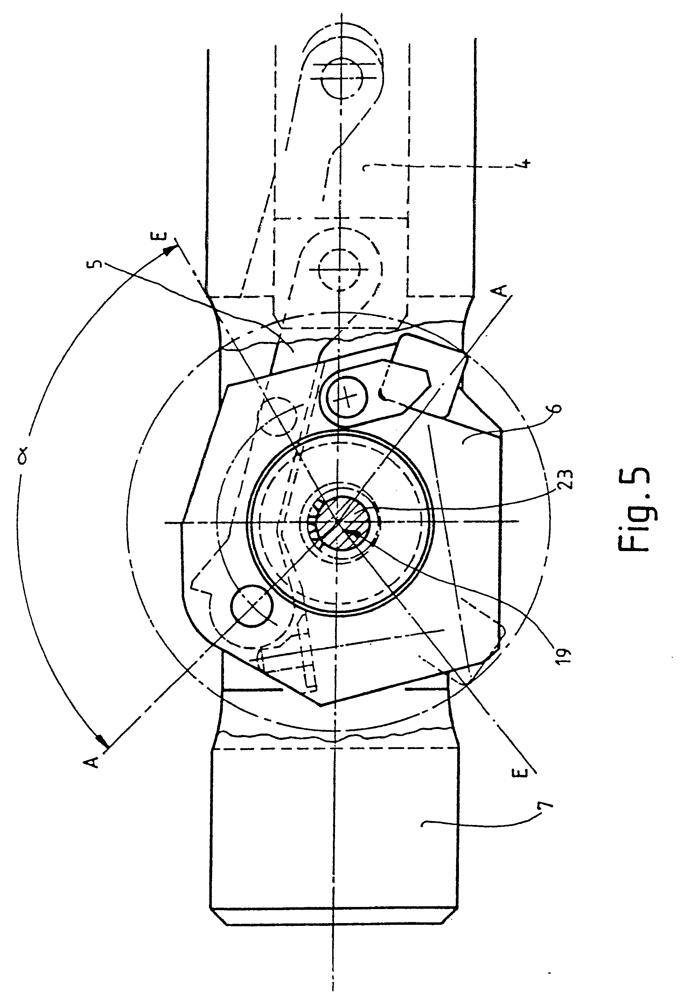

In der Hohlspindel 8 ist ein Zylinderraum 12 vorgesehen, in dem ein Kolben 13 verschiebbar ist, der auf der Zugstange 4 sitzt. Mit ihm kann die Zugstange 4 zur Ausführung einer Drehbewegung des Werkzeugträgers 6 axial verschoben werden. Über den Hebel 5 wird der Werkzeugträger 6 um eine quer zur Achse der Zugstange liegende Achse 14 je nach Verschieberichtung der Zugstange gedreht. Am Werkzeugträger 6 ist, wie Fig. 4 zeigt, mit einem Klemmstück 15 ein plattenförmiges Schneidwerkzeug 16 befestigt, mit dem die kugelig gekrümmte Innenfläche des Werkstückes bearbeitet wird. Vom Antrieb 11 aus wird über das Getriebe 9 die Hohlspindel 8 zusammen mit der Zugstange 4 und dem Werkzeugträger 6 zum Bearbeiten der Innenfläche gedreht. Gleichzeitig wird durch Druckbeaufschlagung des Kolbens 13 die Zugstange 4 axial verschoben, die über den angelenkten Hebel 5 den Werkzeugträger dreht. Dadurch wird das Schneidwerkzeug 16 über die Innenfläche des zu bearbeitenden Werkstückes bewegt, wobei die Schneide 17 (Fig. 4) sich längs des Flugkreises 18 bewegt. Der Drehbewegung des Werkzeugträgers 6 um die Achse der Hohlspindel 8 wird somit eine Drehbewegung des Werkzeugträgers um die Achse 14 überlagert. Somit bestreicht die Schneide 17 bei drehender Hohlspindel 8 und gleichzeitigem Schwenken des Werkzeugträgers 6 eine kugelförmige Fläche. Die Ausgangsstellung des Werkzeugträgers 6 ist in Fig. 5 mit A bezeichnet. Die Endstellung der Arbeitsbewegung ist in Fig. 5 mit E angegeben. Der Schwenkwinkel α zwischen den beiden Stellungen A und E ist im dargestellten Ausführungsbeispiel grösser als 90° und beträgt im Beispielsfalle 104°. Beim herkömmlichen Innenkugeldrehen wird die Bohrstange 7 gerichtet durch ein Fenster in den Innenraum des zu bearbeitenden Werkstückes eingeführt. Wenn das Schneidwerkzeug 16 nach Beendigung des Bearbeitungsvorganges seine Endstellung E erreicht hat, wird das Schneidwerkzeug in dieser Endstellung E gerichtet aus dem bearbeiteten Werkstück herausgeführt.

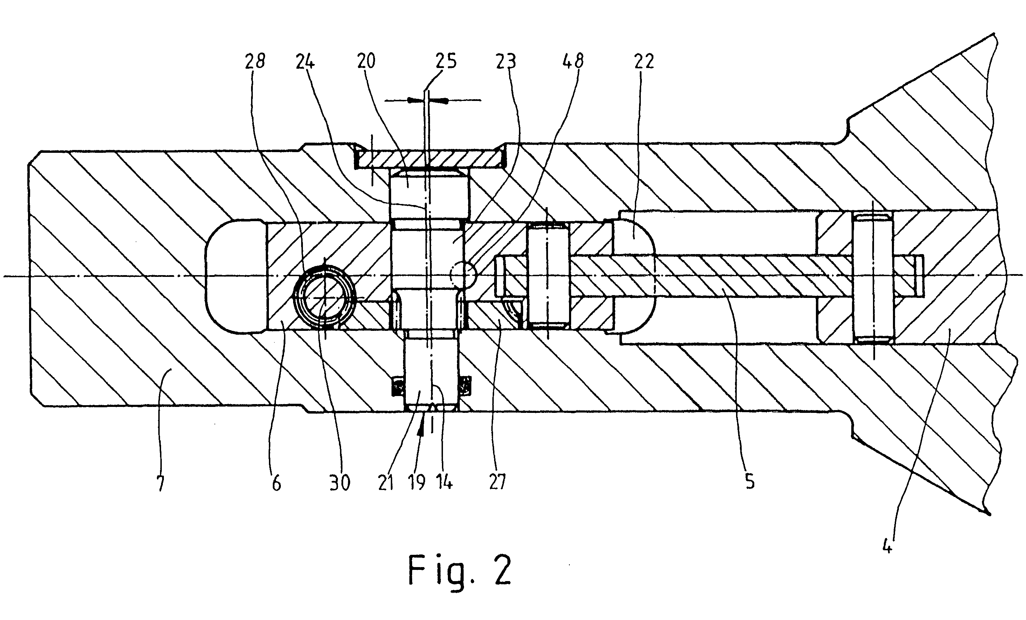

Um Massänderungen der Schneide 17 des Schneidwerkzeuges auszugleichen, beispielsweise aufgrund von Schneidenverschleiss, ist die Vorrichtung mit einer Nachstelleinrichtung versehen, mit der die Schneide 17 des Schneidwerkzeuges 16 einfach nachgestellt werden kann. Hierzu ist der Werkzeugträger 6 auf einer Welle 19 gelagert (Fig. 2, 4 und 5), die gekröpft ausgebildet ist. Sie hat zwei koaxial zueinander liegende Lagerzapfen 20 und 21, deren Achsen die Drehachse 14 des Werkzeugträgers während der Bearbeitung des Werkstückes bilden. Die Welle 19 liegt senkrecht zur Achse der Zugstange 4 und ist mit ihren beiden Lagerzapfen 20, 21 drehbar in der Bohrstange 7 gelagert (Fig. 2). Sie ist mit einer in halber Breite liegenden Ausnehmung 22 versehen, in der der Werkzeugträger 6 gelagert ist. Er hat gleiche Breite wie die Ausnehmung 22, so dass er axial auf der Welle 19 gesichert ist.

Die beiden Lagerzapfen 20, 21 sind durch einen exzentrisch versetzten Mittelteil 23 miteinander verbunden, dessen Achse 24 versetzt zur Achse 14 der beiden Lagerzapfen 20, 21 liegt. Die Achse 14 der beiden Lagerzapfen 20, 21 bildet bei der Arbeitsbewegung des Werkzeugträgers 6 stets die Drehachse. Der Versatz zwischen den beiden Achsen 14 und 24 ist in Fig. 2 mit 25 bezeichnet. Das Prinzip der Schneidennachstellung beruht nun darauf, dass durch Drehen der Welle 19 relativ zum Werkzeugträger 6 ein radialer Versatz des Werkzeugträgers und damit der Schneide 17 infolge des Achsversatzes 25 erreicht wird. Der maximale Versatz der Schneide 17 beträgt demnach bei einer 180°-Drehung zweimal den Achsversatz 25. Um diesen Achsversatz zu erreichen, ist der Werkzeugträger 6 auf dem exzentrisch versetzten Mittelteil 23 der Welle 19 gelagert. Durch entsprechendes Verdrehen der Welle 19 gegenüber dem Werkzeugträger 6 kann somit die Schneide 17 des Schneidwerkzeuges 16 radial nach aussen verstellt werden, wodurch der Durchmesser des Flugkreises 18 entsprechend eingestellt werden kann.

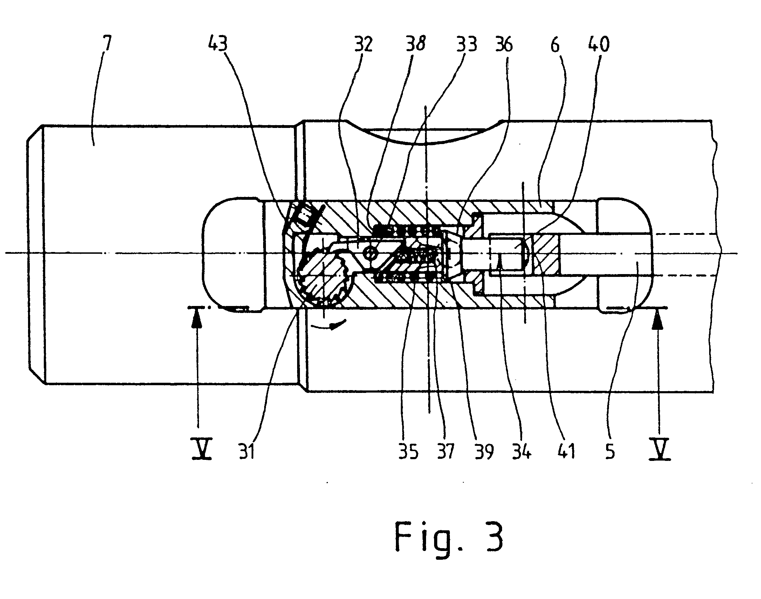

Zum Drehen der Welle 19 ist ein Verstellrad 27 vorgesehen (Fig. 2 und 4), das beispielsweise über eine Zahnwellenverzahnung formschlüssig auf dem Mittelteil 23 der Welle 19 sitzt. Das Verstellrad 27 ist ein Schneckenrad, das mit einer Schnecke 28 kämmt, die drehbar im Werkzeugträger 6 untergebracht ist. Er ist hierzu, wie Fig. 4 zeigt, mit einer Ausnehmung 29 versehen, in der eine die Schnecke 28 tragende Welle 30 drehbar gelagert ist. Auf ihr sitzt nahe einem Ende ein Klinkenrad 31 (Fig. 3 und 4), in das eine Klinke 32 eingreift. Sie ist um eine parallel zur Welle 30 liegende Achse 33 schwenkbar in einem Verstellteil 34 gelagert, der gegen die Kraft einer Druckfeder 35 verschiebbar in einer Ausnehmung 36 im Werkzeugträger 6 verschiebbar gelagert ist. Der Verstellteil 34 hat einen Hülsenteil 37 (Fig. 3), in dem die Klinke 32 schwenkbar gelagert ist und aus dem sie nach aussen ragt. Der Hülsenteil 37 wird von der Druckfeder 35 umgeben, die sich mit einem Ende am Boden 38 der Ausnehmung 36 und mit ihrem anderen Ende an einem Bund 39 des Verstellteiles 34 abstützt. Er hat einen an den Hülsenteil 37 anschliessenden Bolzenteil 40, der einen kleineren Aussendurchmesser als der Hülsenteil hat und der im Bewegungsweg eines Nockens 41 liegt (Fig. 4). Er ist am Hebel 5 vorgesehen und dient dazu, den Verstellteil 34 gegen die Kraft der Druckfeder 35 in Richtung auf die Welle 30 zu verschieben. Da die Klinke 32 in Eingriff mit dem Klinkenrad 31 ist, wird hierbei die Welle 30 gedreht, wobei über die Schnecke 28 das Schneckenrad 27 gedreht wird. Da es drehfest auf der Welle 19 sitzt, wird sie relativ zum Werkzeugträger 6 gedreht. Infolge des Achsversatzes 25 wird hierbei der Werkzeugträger 6 und damit die Schneide 17 des Schneidwerkzeuges 16 radial nach aussen verstellt. Das Verstellrad 27 wird bei dieser Verstellbewegung in Richtung des Pfeiles 42 in Fig. 4 gedreht. Wenn der Nocken 41 wieder zurückgeschoben wird, drückt die Feder 35 den Verstellteil 34 in seine Ausgangslage zurück, in welcher er an einem Anschlag innerhalb der Ausnehmung 36 anliegt. Das Klinkenrad 31 und die Klinke 32 sind so ausgebildet, dass die Klinke beim Zurückschieben des Verstellteiles 34 über die Zähne des Klinkenrades ratschen kann. Ein Zurückdrehen des Klinkenrades 31 wird durch einen Sperrteil 43 verhindert (Fig. 3), der federnd ausgebildet ist und in die Zähne des Klinkenrades 31 so eingreift, dass es nicht entgegen seiner Verstellrichtung zurückgedreht werden kann. Infolge der elastischen Ausbildung ratscht der Sperrteil 43 beim Drehen des Klinkenrades 31 mittels der Klinke 32 über die Zähne des Klinkenrades.

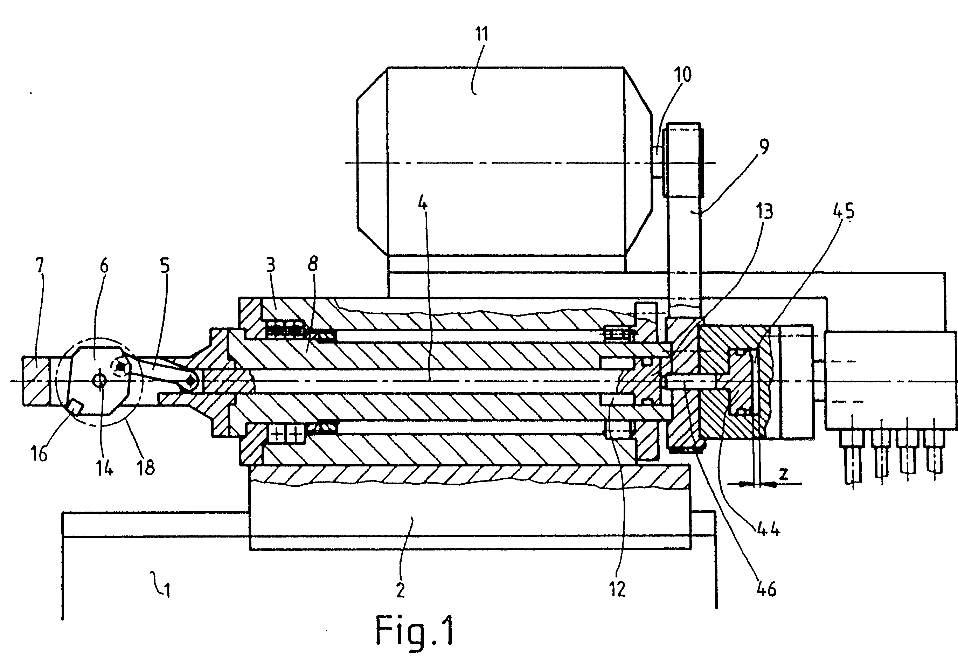

Der Nocken 41 ist im Ausführungsbeispiel am Hebel 5 vorgesehen, vorzugsweise einstückig mit ihm ausgebildet. Um den Verstellteil 34 verschieben zu können, ist die Vorrichtung mit einem weiteren Kolben 44 (Fig. 1) versehen, der in einem weiteren Zylinderraum 45 verschiebbar ist. Er wirkt mit der Zugstange 4 zusammen. Im Ausführungsbeispiel sitzt der Kolben 44 am Ende einer Kolbenstange 46, die einen Anschlag für den Kolben 13 bildet. Mit dem Kolben 44 wird ein Zusatzhub Z ermöglicht. Wenn der Kolben 44 den Zusatzhub Z ausführt und in seine in Fig. 1 rechte Endstellung gelangt, wird der Kolben 13 infolge seiner Druckbeaufschlagung sofort um dieses Mass Z nachgestellt und damit auch über die Schubstange 4 der Werkzeugträger 6 geringfügig um die Achse 14 gedreht. Der Nocken 41 verschiebt dabei den Verstellteil 34 im Werkzeugträger 6 und führt über die Klinke 32, das Klinkenrad 31 und Schneckengetriebe 27, 28 den Verstellschritt der Schneide 17 aus. In Fig. 4 ist die Stellung des Hebels 5 vor dem Zusatzhub mit ausgezogenen Linien und nach dem Zusatzhub mit strichpunktierten Linien dargestellt. Nach Durchführung des Zusatzhubes Z wird der Zusatzkolben 44 zurückgefahren, wodurch der Hebel 5, die Zugstange 4 und der Kolben 13 ebenfalls zurückgeführt werden. Der Werkzeugträger 6 bleibt jedoch in seiner verstellten Lage, da der Sperrteil 43 verhindert, dass die Welle 30 zurückgedreht wird. Der Verstellteil 34 gelangt unter der Kraft der Feder 35 wieder in seine Ausgangslage zurück.

Der beschriebene Nachstellvorgang der Schneide 17 wird zweckmässigerweise nach Ausfahren des Werkzeuges aus dem Werkstück durchgeführt. Beispielsweise erfolgt die Nachstellung bei Transferstrassen während des Werkstücktransportes, so dass kein Zeitverlust eintritt.

Die Nachstelleinrichtung ist zusätzlich für eine manuelle Voreinstellung der Schneide 17 ausgelegt, um ein zeitraubendes Nachstellen bei Werkzeugwechsel in der Maschine möglichst zu vermeiden. Zu diesem Zweck kann die Welle 30 mittels eines Innensechskantschlüssels von Hand gedreht werden. Hierzu ist die Welle 30 an ihrem über das Klinkenrad 31 ragenden Ende mit einer entsprechenden stirnseitigen Ausnehmung 47 (Fig. 4) versehen. Infolge des Sperrteiles 43 kann die Welle 30 allerdings nur in einer Richtung gedreht werden. Bei Neueinstellung des Schneidwerkzeuges 16 nach einem Werkzeugwechsel muss das Verstellrad 27, um in die Ausgangsstellung zu gelangen, um mindestens 270° gedreht werden. Die jeweilige Stellung der Welle 19 kann durch eine entsprechende Markierung am Wellenende sichtbar gemacht werden.

Um ein Spiel zwischen dem Werkzeugträger 6 und der Welle 19 beim Arbeiten mit der Vorrichtung zu eliminieren, ist im Werkzeugträger 6 ein Klemmbolzen 48 (Fig. 2 und 4) vorgesehen. Er liegt parallel zur Welle 30 und wirkt mittels einer stirnseitigen Keilfläche mit einem Konusteil 49 am Übergang vom Bund 38 zum Bolzenteil 40 des Verstellteiles 34 zusammen. Mit diesem Konusteil 49 wird der Verstellteil 34 unter der Kraft der Druckfeder 35 gegen den Klemmbolzen 48 gedrückt, der dadurch gegen den Mittelteil 23 gedrückt wird und die Klemmung erzeugt. Sie wird zwangsläufig aufgehoben, sobald der Verstellteil 34 vom Nocken 41 gegen die Kraft der Druckfeder 35 geringfügig verschoben wird. Der eigentliche Nachstellvorgang erfolgt also nach dem Lösen dieser Klemmung. Der Klemmbolzen 48 und das Schneidwerkzeug 16 liegen auf einander gegenüberliegenden Seiten der Achse 14. Dadurch wird erreicht, dass in der Klemmstellung der Bereich des Werkzeugträgers 6 gegen die Welle 19 gedrückt wird, in dem das Schneidwerkzeug 16 vorgesehen ist. Die Drehrichtung 42 der Welle 19 ist so gewählt, dass sie dem Klemmbolzen 48 entgegenwirkt. Dadurch wird das Lösen des Klemmbolzens 48 unterstützt.

Im beschriebenen Ausführungsbeispiel zieht der Hebel 5 den Werkzeugträger 6 während der Arbeitsbewegung, bei der der Werkzeugträger aus der Stellung A in die Stellung E gedreht wird (Fig. 5). In der Ausgangsstellung A ist die Zugstange 4 am weitesten gegen den Werkzeugträger 6 geschoben. Diese Ausgangsstellung ist in Fig. 5 dargestellt. Selbstverständlich kann die beschriebene Nachstellung des Schneidwerkzeuges 16 auch vorgenommen werden, wenn der Hebel 5 den Werkzeugträger 6 schiebt bzw. drückt. In diesem Falle ist die Drehbewegung des Werkzeugträgers 6 entgegengesetzt zur Drehbewegung gemäss dem beschriebenen Ausführungsbeispiel. Bei dieser Umkehrung der Drehbewegung wird die Lage der Schneide 17 des Schneidwerkzeuges 16 entsprechend geändert. Bei dieser abgewandelten Ausführungsform muss dann selbstverständlich der Nachstellhub Z der Ausgangsstellung A vorgelagert werden.

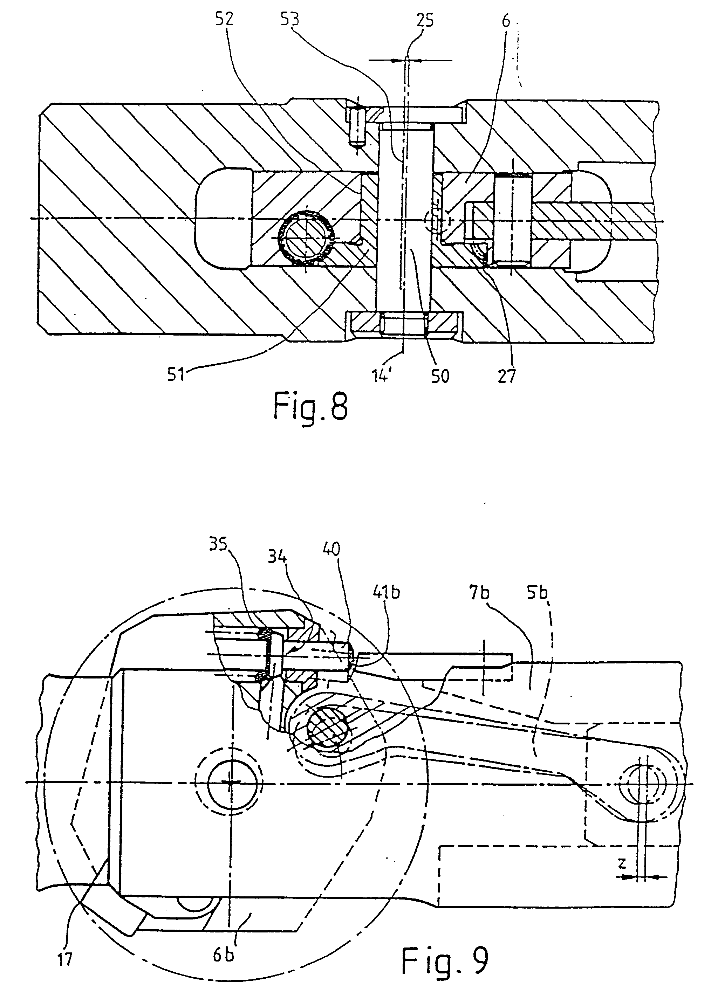

Fig. 8 zeigt eine weitere Ausführungsform, bei der anstelle der Welle 19 mit dem exzentrischen Mittelteil 23 einen fest stehenden Achsbolzen 50 vorgesehen ist, auf dem eine Buchse 51 drehbar gelagert ist. Ihr Aussenmantel 52 verläuft exzentrisch in bezug auf die Achse 14' des Achsbolzens 50. Die Achse 53 der Buchse 51 liegt somit exzentrisch zur Achse 14', wodurch wiederum ein Achsversatz gebildet wird. Die Buchse 51 ist mit dem Verstellrad 27 drehfest verbunden, vorzugsweise einstückig mit ihm ausgebildet. Der Werkzeugträger 6 sitzt drehbar auf der Buchse 51. Die Schneide 17 wird in gleicher Weise nachgestellt wie beim zuvor beschriebenen Ausführungsbeispiel.

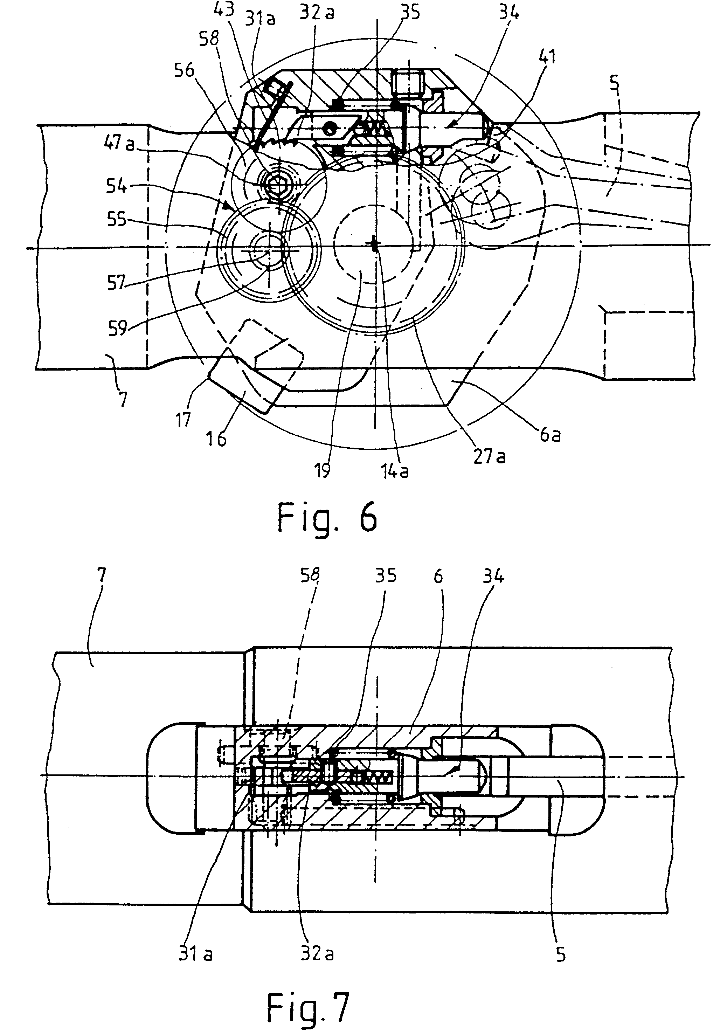

Beim Ausführungsbeispiel nach den Fig. 6 und 7 ist anstelle der Welle 30 ein Stirnradgetriebe 54 vorgesehen. Es hat zwei miteinander in Eingriff befindliche Stirnräder 55 und 56, die auf zueinander parallelen Wellen 57 und 58 sitzen. Auf der Welle 57 sitzt ein weiteres, im Durchmesser kleineres Stirnrad 59, das mit dem Verstellrad 27a kämmt. Es ist im Ausführungsbeispiel als Stirnrad ausgebildet. Auf der Welle 56 sitzt ausser dem Stirnrad 56 das Klinkenrad 31a, in das die Klinke 32a eingreift. Die Wellen 57, 58 liegen parallel zueinander und zur Achse 14a, um die der Werkzeugträger 6a beim Arbeiten dreht. Die Nachstellung der Schneide 17 des Schneidwerkzeuges 16 erfolgt, wie dies anhand des ersten Ausführungsbeispieles beschrieben worden ist, mittels des Kolbens 44. Über den Nocken 41 des Hebels 5 wird der Verstellteil 34 gegen die Kraft der Druckfeder 35 verschoben, wodurch das Klinkenrad 31a im Gegenuhrzeigersinn gedreht wird. Über das Stirnradgetriebe 54 wird die Welle 19 gedreht, wobei der auf dem exzentrischen Mittelteil dieser Welle sitzende Werkzeugträger 6a radial verstellt wird. Ein Zurückdrehen des Klinkenrades 31a beim Zurückziehen des Hebels 5 und des Verstellteiles 34 wird wiederum durch den Sperrteil 43 verhindert.

Um die Schneide 17 manuell voreinstellen zu können, ist die Welle 58 wiederum mit einer stirnseitigen Ausnehmung 47a (Fig. 6) für einen Inbussschlüssel versehen. Die Wellen 57, 58 sind ausschliesslich im Werkzeugträger 6a vorgesehen, so dass in der Bohrstange 7 keine Aufnahmen für die Wellen notwendig sind. Im übrigen ist diese Ausführungsform gleich ausgebildet wie das erste Ausführungsbeispiel.

Bei der Ausführungsform gemäss Fig. 9 ist der Nocken 41b, mit dem der Verstellteil 34 gegen die Kraft der Druckfeder 35 verschoben wird, nicht am Hebel 5b, sondern an der Bohrstange 7b vorgesehen. Um die Schneide 17 nachstellen zu können, wird wie bei den zuvor beschriebenen Ausführungsbeispielen die Schubstange mit dem Hebel 5b und dem Zusatzhub Z zurückgeschoben, wodurch der Werkzeugträger 6b im Uhrzeigersinn gedreht wird. Hierbei läuft der Verstellteil 34 mit seinem Bolzenteil 40 auf den Nocken 41b auf und wird beim weiteren Drehen des Werkzeugträgers 6b verschoben. Die Nachstelleinrichtung ist in gleicher Weise ausgebildet, wie dies anhand der vorherigen Ausführungsformen beschrieben worden ist.

Mit den beschriebenen Ausführungsformen kann ein ausreichend grosser Nachstellweg erzielt werden, wobei die Schneiden manuell voreingestellt werden können. Entsprechend der Zahl der Zähne der Klinkenräder und dem gewählten Übersetzungsverhältnis können die Nachstellschritte im gewünschten Masse abgestuft werden. Die Nachstelleinrichtung selbst zeichnet sich durch eine hohe Starrheit und Steifigkeit aus, so dass bei der Bearbeitung eine hohe Oberflächengüte und eine hohe Starrheit gewährleistet sind. Die Schneiden können ohne Produktionsverlust während der Maschinennebenzeiten nachgestellt werden. Die beschriebenen Nachstelleinrichtungen lassen sich mit verhältnismässig geringem technischen Aufwand und geringen Kosten in bereits bestehende Vorrichtungen nachträglich einbauen. Die Nachstelleinrichtung benötigt nur wenig Platz, da sie innerhalb der Bohrstange oder gar nur innerhalb des Werkzeugträgers untergebracht werden kann.

**Patentansprüche**

1. Vorrichtung zur Bearbeitung von kugelig gekrümmten Innenflächen an einem Werkstück, mit einer Hohlspindel (8), die drehfest mit einer Bohrstange (7) verbunden ist, die mit einem um eine Drehachse (14, 14', 14a) drehbaren Werkzeugträger (6, 6a, 6b) versehen ist, der ein Schneidwerkzeug (16) trägt, das mit einer Nachstelleinrichtung etwa radial verstellbar ist, die mindestens eine Schubstange (4) aufweist, die zur Radialverstellung des Schneidwerkzeuges axial verschiebbar ist, dadurch gekennzeichnet, dass der Werkzeugträger (6, 6a, 6b) zum Nachstellen drehbar auf einem Exzenterteil (23, 51) sitzt, dessen Achse (24) parallel zur Drehachse (14, 14', 14a) des Werkzeugträgers (6, 6a, 6b) liegt und der um die Drehachse (14, 14', 14a) einstellbar ist.

2. Vorrichtung nach Anspruch 1, dadurch gekennzeichnet, dass der Werkzeugträger (6, 6a, 6b) über einen Hebel (5) mit der Schubstange (4) gelenkig verbunden ist.

3. Vorrichtung nach Anspruch 1 oder 2, dadurch gekennzeichnet, dass der Exzenterteil (23) an einer gekröpften Welle (19) vorgesehen ist, die zwei koaxial zueinander liegende Lagerzapfen (20, 21) aufweist, die in der Bohrstange (7) gelagert und durch den Exzenterteil (23) miteinander verbunden sind, auf dem der Werkzeugträger (6, 6b) drehbar gelagert ist.

4. Vorrichtung nach Anspruch 1 oder 2, dadurch gekennzeichnet, dass der Exzenterteil (51) eine auf einer fest stehenden Achse (50) drehbar sitzende Buchse ist, deren Aussenmantel (52) eine Achse (53) hat, die parallel zur Längsmittellinie (14) der Achse (50) liegt.

5. Vorrichtung nach einem der Ansprüche 1 bis 4, dadurch gekennzeichnet, dass der Exzenterteil (23, 51) über ein Getriebe (27, 28, 30, 31, 32, 24; 54, 34) mit der Schubstange (4) antriebsverbunden ist.

6. Vorrichtung nach Anspruch 5, dadurch gekennzeichnet, dass das Getriebe ein Klinkengetriebe (31, 31a, 32, 32a) aufweist, mit dem der Exzenterteil (23, 51) schrittweise drehbar ist und das über ein Zahnradgetriebe (27, 28; 54) mit dem Exzenterteil (23, 51) verbunden ist.

7. Vorrichtung nach Anspruch 6, dadurch gekennzeichnet, dass das Zahnradgetriebe (27, 28) ein Schneckengetriebe ist, dessen Schneckenrad (27) drehfest mit dem Exzenterteil (23) verbunden ist und dessen Schnecke (28) mit einem Klinkenrad (31) des Klinkengetriebes (31, 32) auf einer gemeinsamen Welle (30) sitzt.

8. Vorrichtung nach Anspruch 6, dadurch gekennzeichnet, dass das Klinkenrad (31a) des Klinkengetriebes (31a, 32a) und ein Zahnrad (56) des als Stirnradgetriebe ausgebildeten Zahnradgetriebes auf einer gemeinsamen Welle (58) sitzen.

9. Vorrichtung nach einem der Ansprüche 6 bis 8, dadurch gekennzeichnet, dass eine Klinke (32, 32a) des Klinkengetriebes (31, 31a, 32, 32a) gegen Federkraft verschiebbar am Werkzeugträger (6, 6a, 6b) angeordnet und Teil eines Verstellteiles (34) ist, der gegen die Kraft einer Druckfeder (35) verschiebbar im Werkzeugträger (6, 6a, 6b) angeordnet ist.

10. Vorrichtung nach Anspruch 9, dadurch gekennzeichnet, dass dem Verstellteil (34) zum Verschieben ein Steuernocken (41, 41b) zugeordnet ist.

11. Vorrichtung nach Anspruch 10, dadurch gekennzeichnet, dass der Steuernocken (41) durch die Schubstange (4) verstellbar und am Hebel (5) zwischen dem Werkzeugträger (6, 6a) und der Schubstange (4) vorgesehen ist.

12. Vorrichtung nach Anspruch 10, dadurch gekennzeichnet, dass der Steuernocken (41b) an der Bohrstange (7b) vorgesehen ist.

13. Vorrichtung nach einem der Ansprüche 1 bis 12, bei der zur Drehung des Werkzeugträgers die Schubstange mit einem Verschiebeantrieb verbunden ist, dadurch gekennzeichnet, dass zur Radialverstellung des Schneidwerkzeuges (16) ein Zusatzverschiebeantrieb (44, 45) vorgesehen ist, mit dem der Schubstange (4) ein Zusatzhub (Z) erteilbar ist.

14. Vorrichtung nach Anspruch 13, dadurch gekennzeichnet, dass der Zusatzverschiebeantrieb (44, 45) einen doppelt beaufschlagbaren Kolben (44) aufweist, der mit einem doppelt beaufschlagbaren Kolben (13) des Verschiebeantriebes (12, 13) zusammenwirkt und der auf einer Kolbenstange (46) sitzt, die mit dem Kolben (13) des Verschiebeantriebes (12, 13) zusammenwirkt.

15. Vorrichtung nach Anspruch 13 oder 14, dadurch gekennzeichnet, dass der Kolben (13) des Verschiebeantriebes (12, 13) auf der Schubstange (4) sitzt.

16. Vorrichtung nach einem der Ansprüche 13 bis 15, dadurch gekennzeichnet, dass die beaufschlagbare Fläche des Kolbens (44) des Zusatzverschiebeantriebes (44, 45) grösser ist als die entsprechende Fläche des Kolbens (13) des Verschiebeantriebes (12, 13).

17. Vorrichtung nach einem der Ansprüche 1 bis 16, dadurch gekennzeichnet, dass der Werkzeugträger (6, 6a) mit mindestens einem Klemmteil (48) am Exzenterteil (23) verklemmbar ist, dass die Drehrichtung (42) des Exzenterteiles (23, 51) und die Löserichtung zur Aufhebung der Verklemmung vorzugsweise etwa gleich gerichtet sind, und dass das Schneidwerkzeug (16) und der Klemmteil (48) vorzugsweise auf einander gegenüberliegenden Seiten des Exzenterteiles (23) am Werkzeugträger (6, 6a, 6b) angeordnet sind.

18. Vorrichtung nach Anspruch 17, dadurch gekennzeichnet, dass der Klemmteil (48) mit einem Konusteil (49) des Verstellteiles (34) zusammenwirkt, der unter der Kraft der Druckfeder (35) mit seinem Konusteil (49) am Klemmteil (48) verklemmbar ist.

## Claims

1. Device for the processing of the spherical curved internal surfaces on a workpiece, with a hollow spindle (8) connected to a drilling rod (7) so that it cannot rotate, with a tool carrier (6, 6a, 6b) which can rotate around an axis (14, 14', 14a) and which carries a cutting tool (16) which is adjustable approximately radially by an adjustment device which has at least one push rod (4) which can be moved axially for radial adjustment of the cutting tool, characterised by the fact that for adjustment the tool carrier (6, 6a, 6b) is mounted so that it can rotate on an excentric part (23, 51) whose axis (24) is parallel to the axis of rotation (14, 14', 14a) of the tool carrier (6, 6a, 6b) and which is adjustable around the axis of rotation (14, 14', 14a).

2. Device according to Claim 1, characterised by the fact that the tool carrier (6, 6a, 6b) is hinged to the push rod (4) through a lever (5).

3. Device according to Claim 1 or 2, characterised by the fact that the excentric part (23) is provided on a crowned shaft (19) which possesses two coaxial bearing lugs (20, 21) mounted in the drilling rod (7) and connected together by the excentric part (23) on which the tool carrier (6, 6b) is mounted so that it can rotate.

4. Device according to Claim 1 or 2, characterised by the fact that the excentric part (51) is a bush mounted on a fixed shaft (50) so that it can rotate and whose outer jacket (52) has an axis (53) which lies parallel to the longitudinal centre line (14) of the shaft (50).

5. Device according to one of Claims 1 to 4, characterised by the fact that the excentric part (23, 51) is connected to the push rod (4) through a gear (27, 28, 30, 31, 32, 24; 54, 34).

6. Device according to Claim 5, characterised by the fact that the gear has a pawl gear (31, 31a, 32, 32a) with which the excentric part (23, 51) can be rotated in stages and which is connected to the excentric part (23, 51) through a toothed wheel gear (24, 28; 54).

7. Device according to Claim 6, characterised by the fact that the toothed wheel gear (27, 28) is a worm gear whose wheel (27) is firmly connected with the excentric part (23) and whose worm (28) is mounted on a common shaft (30) with one pawl gear (31) of the pawl gear (31, 32).

8. Device according to Claim 6, characterised by the fact that the pawl wheel (31a) of the pawl gear (31a, 32a) and a gear wheel (56) of the toothed wheel gear designed as a spur gear are located on a common shaft (58).

9. Device according to one of Claims 6 to 8, characterised by the fact that a pawl (32, 32a) of the pawl gear (31, 31a, 32, 32a) can be moved against the force of a spring on the tool carrier (6, 6a, 6b) and forms part of an adjustment component (34) which can move against the force of a thrust spring (35) and is mounted in the tool carrier (6, 6a, 6b).

10. Device according to Claim 9, characterised by the fact that the adjustment component (34) has a control cam (41, 41b) for displacement purposes.

11. Device according to Claim 10, characterised by the fact that the control cam (41) can be adjusted with the push rod (4) and is provided on the lever (5) between the tool carrier (6, 6a) and the push rod (4).

12. Device according to Claim 10, characterised by the fact that the control cam (41b) is provided on the drilling rod (7b).

13. Device according to one of Claims 1 to 12, in which for rotating the tool carrier the push rod is connected to a displacement drive, characterised by the fact that for radial adjustment of the cutting tool (16) there is an additional displacement drive (44, 45) with which an additional stroke (Z) can be applied to the push rod (4).

14. Device according to Claim 13, characterised by the fact that the additional displacement drive (44, 45) possesses a double pressurised piston (44) which acts together with a double pressurised piston (13) in the displacement drive (12, 13) and is mounted on a piston rod (46) which acts together with the piston (13) of the displacement drive (12, 13).

15. Device according to Claim 13 or 14, characterised by the fact that the piston (13) of the displacement drive (12, 13) is mounted on the push rod (4).

16. Device according to one of Claims 13 to 15, characterised by the fact that the pressurised surface area of the piston (44) in the additional displacement drive (44, 45) is greater than the corresponding surface area of the piston (13) of the displacement drive (12, 13).

17. Device according to one of Claims 1 to 16, characterised by the fact that the tool carrier (6, 6a) can be secured on the excentric part (23) by at least one clamping part (48), that the direction of rotation (42) of the excentric part (23, 51) and the direction of release for cancelling the clamping movement are preferably approximately equal and that the cutting tool (16) and the clamping part (48) are preferably located on opposite sides of the excentric part (23) on the tool carrier (6, 6a, 6b).

18. Device according to Claim 17, characterised by the fact that the clamping part (48) acts together with a conical part (49) of the adjustment component (34) which can be clamped with its conical part (49) on the clamping component (48) under the pressure of the thrust spring (35).

**Revendications**

1. Dispositif pour l'usinage de surfaces intérieures à courbure sphérique sur une pièce, avec une broche creuse (8) reliée de manière rigide en rotation à une broche de perçage (7), laquelle est munie d'un porte-outil (6, 6a, 6b) qui peut tourner autour d'un axe de rotation (14, 14', 14a) et porte un outil de coupe (16) déplaçable à peu près radialement au moyen d'un dispositif de rattrapage de jeu équipé d'au moins une bielle (4) qui, pour le déplacement radial de l'outil de coupe, peut être déplacée dans le sens axial, caractérisé en ce que, pour le rattrapage de jeu, le porte-outil (6, 6a, 6b) est monté de manière tournante sur un élément d'excentrique (23, 51) dont l'axe (24) est parallèle à l'axe de rotation (14, 14', 14a) du porte-outil (6, 6a, 6b) et qui peut être réglé autour de l'axe de rotation (14, 14', 14a).

2. Dispositif selon la revendication 1, caractérisé en ce que le porte-outil (6, 6a, 6b) est articulé avec la bielle (4) par l'intermédiaire d'un levier (5).

3. Dispositif selon l'une des revendications 1 ou 2, caractérisé en ce que l'élément d'excentrique (23) est prévu sur un arbre coudé (19) qui présente deux tourillons coaxiaux (20, 21), lesquels sont monté dans la broche de perçage (7) et reliés par l'élément d'excentrique (23) sur lequel le porte-outil (6, 6b) est monté de manière tournante.

4. Dispositif selon l'une des revendications 1 ou 2, caractérisé en ce que l'élément d'excentrique (51) est constitué par une douille montée de manière tournante sur un axe fixe (50) et dont l'enveloppe extérieure (52) a un axe (53) qui est parallèle à la ligne axiale longitudinale (14) de l'axe (50).

5. Dispositif selon l'une quelconque des revendications 1 à 4, caractérisé en ce que l'élément d'excentrique (23, 51) est en liaison d'entraînement avec la bielle (4) par l'intermédiaire d'un engrenage (27, 28, 30, 31, 32, 24; 54, 34).

6. Dispositif selon la revendication 5, caractérisé en ce que l'engrenage comprend un mécanisme à cliquet (31, 31a, 32, 32a) avec lequel l'élément d'excentrique (23, 51) peut être tourné pas à pas et qui est relié par l'intermédiaire d'un engrenage (27, 28; 54) à l'élément d'excentrique (23, 51).

7. Dispositif selon la revendication 6, caractérisé en ce que l'engrenage (27, 28) est un engrenage à vis sans fin dont la roue tangente (27) est solidaire en roation avec l'élément d'excentrique (23) et dont la vis sans fin (28) est montée, conjointement avec une roue à cliquet (31) du mécanisme à cliquet (31, 32), sur un arbre commun (30).

8. Dispositif selon la revendication 6, caractérisé en ce que la roue à cliquet (31a) du mécanisme à cliquet (31a, 32a) et une roue dentée (56) de l'engrenage réalisé sous la forme d'un engrenage droit sont montées sur un arbre commun (58).

9. Dispositif selon l'une quelconque des revendications 6 à 8, caractérisé en ce qu'un cliquet (32, 32a) du mécanisme à cliquet (31, 31a, 32, 32a) est disposé sur le porte-outil (6, 6a, 6b) de façon à pouvoir être déplacé contre la force d'un ressort et qu'il fait partie d'un élément de réglage (34), lequel est monté dans le porte-outil (6, 6a, 6b) de façon à pouvoir être déplacé contre la force d'un ressort (35).

10. Dispositif selon la revendication 9, caractérisé en ce qu'à l'élément de réglage (34) est associée, pour le déplacement, une came de commande (41, 41b).

11. Dispositif selon la revendication 10, caractérisé en ce que la came de commande (41) peut être déplacée par la bielle (4) et qu'elle est prévue sur le levier (5), entre le porte-outil (6, 6a) et la bielle (4).

12. Dispositif selon la revendication 10, caractérisé en ce que la came de commande (41b) est prévue sur la broche de perçage (7b).

13. Dispositif selon l'une quelconque des revendications 1 à 12, dans lequel la bielle est reliée, pour la mise en rotation du porte-outil, à un mécanisme de déplacement, caractérisé en ce qu'il comprend, pour le déplacement radial de l'outil de coupe (16), un mécanisme de déplacement supplémentaire (44, 45) qui permet de faire effectuer à la bielle (4) une course supplémentaire (Z).

14. Dispositif selon la revendication 13, caractérisé en ce que le mécanisme de déplacement supplémentaire (44, 45) comprend un piston (44) à double action, lequel coopère avec un piston (13) à double action du mécanisme de déplacement (12, 13) et est monté sur une tige de piston (46), laquelle coopère avec le piston (13) du mécanisme de déplacement (12, 13).

15. Dispositif selon l'une des revendications 13 ou 14, caractérisé en ce que le piston (13) du mécanisme de déplacement (12, 13) est monté sur la bielle (4).

16. Dispositif selon l'une quelconque des revendications 13 à 15, caractérisé en ce que la surface du piston (44) du mécanisme de déplacement supplémentaire (44, 45) pouvant être mise sous pression est plus grande que la surface correspondante du piston (13) du mécanisme de déplacement (12, 13).

17. Dispositif selon l'une quelconque des revendications 1 à 16, caractérisé en ce que le porte-outil (6, 6a) peut être bloqué avec au moins un élément de serrage (48) sur l'élément d'excentrique (23); que le sens de rotation (42) de l'élément d'excentrique (23, 51) et le sens de desserrage pour l'annulation du blocage sont, de préférence, orientés à peu près dans la même direction, et que l'outil de coupe (16) et l'élément de serrage (48) sont disposés, de préférence, sur des côtés opposés de l'élément d'excentrique (23) sur le porte-outil (6, 6a, 6b).

18. Dispositif selon la revendication 17, caractérisé en ce que l'élément de serrage (48) coopère avec un élément conique (49) de l'élément de réglage (34) qui, sous l'action du ressort de pression (35), peut être bloqué avec son élément conique (49) sur l'élément de serrage (48).

Fig.1

EP 0 223 152 B1

28  24  20  25  23  48  22

11

7  6  30  21 19 14  27  5  4

EP 0 223 152 B1

Fig. 2

Fig. 3

Fig.4

EP 0 223 152 B1

Fig. 5

EP 0 223 152 B1

Fig. 6

Fig. 7

Fig.8

Fig.9